# EUROPEAN PATENT APPLICATION

(11) **EP 4 316 823 A1**
(43) Date of publication of application: **07.02.2024**
(21) Application number: 22780056.2
(22) Date of filing: 14.03.2022
(51) Int. Cl.: B32B 27/18

(54) **LAMINATE**

(30) Priority: 31.03.2021 JP 2021062306
(71) Applicant: NIPPON SHEET GLASS COMPANY, LIMITED, Tokyo 108-6321 (JP)
(72) Inventor: OYA, Kazuaki, Tokyo 108-6321 (JP); HAYASHI, Kiyomi, Tokyo 108-6321 (JP)
(74) Representative: Hasegawa, Kan
(86) International application number: PCT/JP2022/011432
(87) International publication number: WO 2022/209835

(57) **Abstract**

Provided is a laminate that has both a photocatalytic function and a reflection suppressing function. A glass member according to the present invention includes a substrate having a first surface and a second surface and a functional film formed on the first surface. The functional film contains a binder containing a metal oxide that forms three-dimensional network bonds, metal oxide microparticles that are retained by the binder and dispersed in a single layer, and photocatalyst microparticles arranged between the metal oxide microparticles.

## Description

### Technical Field

The present invention relates to a laminate.

### Background Art

Patent Literature 1 discloses a glass article provided with a functional film that contains silica microparticles and titanium oxide microparticles. The glass article is described as having both a photocatalytic function and a reflection suppressing function.

### Citation List

### Patent Literature

Patent Literature 1: JP 2013-158683A

### Summary of Invention

### Technical Problem

However, there are high demands for the photocatalytic function (antibacterial function) and the reflection suppressing function, and further improvement is desired. The present invention was made to address this issue and has an object of providing a laminate that has both the photocatalytic function and the reflection suppressing function.

### Solution to Problem

Item 1: A laminate including:
   a substrate that has a first surface and a second surface; and
   a functional film that is formed on the first surface,
   wherein the functional film contains:
      a binder containing a metal oxide that forms three-dimensional network bonds;
      metal oxide microparticles that are retained by the binder and are dispersed in a single layer; and
      photocatalyst microparticles that are arranged between the metal oxide microparticles.
Item 2: The laminate according to Item 1,
   wherein the ratio of the mass of the metal oxide microparticles to the total mass of the inorganic oxide microparticles and the binder contained in the functional film is greater than 0.4.
Item 3: The laminate according to Item 1 or 2,
   wherein the metal oxide microparticles are formed of silica, and
   the photocatalyst microparticles are formed of titanium oxide.
Item 4: The laminate according to any one of Items 1 to 3,
   wherein the content of the photocatalyst microparticles in the functional film is 35 mass% or more.
Item 5: The laminate according to any one of Items 1 to 4,
   wherein the content of the metal oxide microparticles in the functional film is 50 mass% or less.
Item 6: The laminate according to any one of Items 1 to 5,
   wherein a distance between adjacent metal oxide microparticles among the metal oxide microparticles is less than 1 µm.
Item 7: The laminate according to any one of Items 1 to 6,
   wherein the photocatalyst microparticles are stacked between the metal oxide microparticles.
Item 8: The laminate according to any one of Items 1 to 7,
   wherein an average particle diameter of the metal oxide microparticles is at least five times an average particle diameter of the photocatalyst microparticles.
Item 9: The laminate according to any one of Items 1 to 8,
   wherein the photocatalyst microparticles has a larger refractive index than the substrate.
Item 10: The laminate according to any one of Items 1 to 9,
   wherein the functional film contains antibacterial metal ions.
Item 11: The laminate according to Item 10,
   wherein the metal ions are copper ions.
Item 12: The laminate according to any one of Items 1 to 11,
   wherein the substrate is a glass plate.

### Advantageous Effects of Invention

According to the present invention, the photocatalytic function and the reflection suppressing function can be realized at the same time.

### Brief Description of Drawings

FIG. 1 is a cross-sectional view showing an embodiment in which a laminate according to the present invention is applied to a glass member;
FIG. 2 is a cross-sectional view schematically showing an example of a functional film shown in FIG. 1;
FIG. 3 is a graph showing relationships between the wavelength and the transmittance of Examples 1 to 5;
FIG. 4 is a graph showing relationships between the wavelength and the transmittance of Examples 6 to 12;
FIG. 5 is a graph showing relationships between the wavelength and the reflectance of Examples 13 to 15; and
FIG. 6 shows photographs of a surface and a cross section of an antibacterial film of Example 1, which were taken using an SEM.

### Description of Embodiments

Hereinafter, an embodiment in which a laminate according to the present invention is applied to a glass member will be described with reference to the drawings. The glass member according to the present embodiment can be used in various applications. For example, the glass member can be used to cover an article or can be used as a part of a structure. Examples of articles include common displays and various devices such as mobile PCs, tablet PCs, in-vehicle devices such as car navigation systems, devices of which at least a portion has a display function realized by electronic components, and display devices that do not have an electronic display function but display something to the outside. The glass member is applicable to not only devices but also articles to be displayed to the outside, such as commodities. Examples of the structure mentioned above include various structures in which glass is used such as buildings, cases such as show cases, glass plates of copying machines, and partition panels.

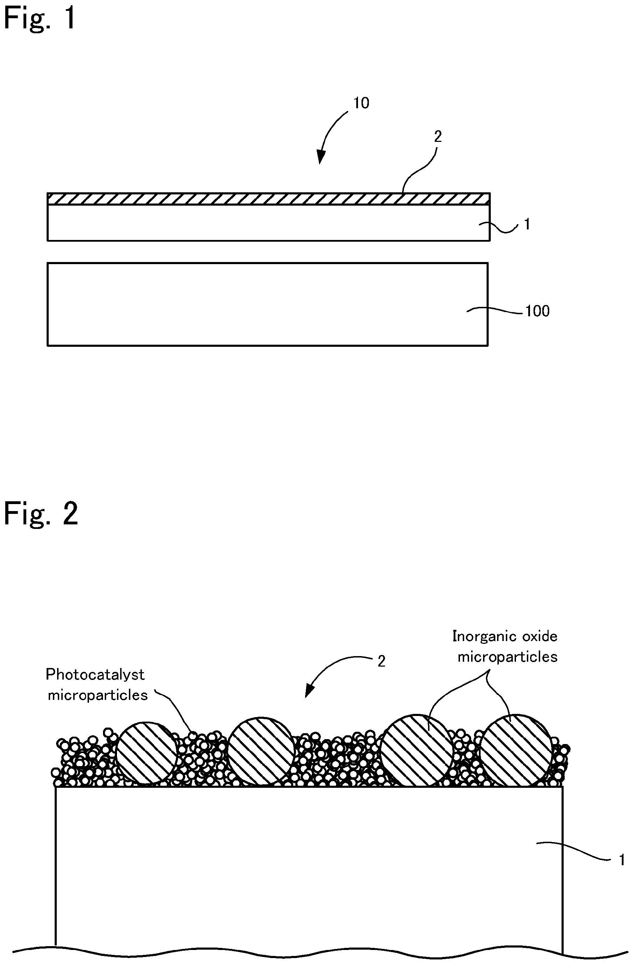

FIG. 1 is a cross-sectional view of a glass member. As shown in FIG. 1, a glass member 10 according to the present embodiment includes a glass plate 1 having a first surface and a second surface, and a functional film 2 layered on the first surface of the glass plate 1. When the glass member 10 is used as a cover member, the glass member 10 is disposed covering an article 100 described above. In this case, the glass member 10 is disposed with the second surface of the glass plate 1 facing the article 100 and the functional film 2 facing outward. A more detailed description will be given below.

### <1. Glass Plate>

The glass plate 1 can be made of general-purpose soda-lime glass, borosilicate glass, aluminosilicate glass, alkali-free glass, or other types of glass, for example. Also, the glass plate 1 can be formed using a float process. The float process makes it possible to obtain a glass plate 1 having a flat and smooth surface. However, the glass plate 10 may have recesses and protrusions on its main surface, and may be made of figured glass, for example. Figured glass can be formed using a process called a roll out process. Figured glass that is formed using this production process usually has periodic recesses and protrusions in one direction that extends along the main surface of the glass plate.

In the float process, molten glass is continuously supplied onto a molten metal such as molten tin, and the supplied molten glass is made to flow over the molten metal and thereby formed into a strip-like shape. The thus formed glass is called a "glass ribbon".

The glass ribbon is cooled as it moves downstream, and the cooled and solidified glass ribbon is raised from the molten metal by rollers. Then, the glass ribbon is transported to an annealing lehr by rollers, annealed, and then cut. A float glass plate can be obtained in this manner.

Although the thickness of the glass plate 1 is not particularly limited, a thin glass plate is better for weight reduction. The thickness of the glass plate 1 is preferably 0.3 to 5 mm, and more preferably 0.6 to 2.5 mm, for example. The reason for this is that, if the glass plate 10 is excessively thin, the strength is reduced, while if the glass plate 10 is excessively thick, the article 100 may be distorted when seen through the glass member 10.

The glass plate 1 typically may be a flat plate, but may also be a bent plate. In particular, in the case where a member to be protected has a non-flat surface such as a curved surface, the glass plate 1 preferably has a main surface with a non-flat surface shape that fits the non-flat surface of the member to be protected. In this case, the entire glass plate 1 may be bent so as to have a constant curvature, or the glass plate 1 may be locally bent. The main surface of the glass plate 1 may be constituted by, for example, a plurality of flat surfaces connected via a curved surface. The radius of curvature of the glass plate 1 can be 5,000 mm or less, for example. The lower limit value of this radius of curvature can be 10 mm or more, for example, but a locally bent portion, in particular, may have an even smaller radius of curvature, which can be 1 mm or more, for example.

A glass plate having the following composition can also be used. Hereinafter, unless otherwise specified, "%" as used when indicating the amounts of components of the glass plate 1 means "mol%" in all instances. Also, in this specification, the wording "substantially composed of" means that the total content of listed components accounts for 99.5 mass% or more, preferably 99.9 mass% or more, and more preferably 99.95 mass% or more. The wording "substantially does not contain" means that the content of the component in question is 0.1 mass% or less, and preferably 0.05 mass% or less.

Based on the composition (hereinafter also referred to as "SL in the narrow sense", or simply as "SL") of float plate glass, which is widely used as a composition of glass that is suitable for producing a glass plate using the float process, the inventor of the present invention has conducted a study to find a composition with which chemical strengthening properties of the SL in the narrow sense can be improved, while enabling T₂, T₄, and other characteristics to approximate as closely as possible to those of the SL in the narrow sense, within a composition range that is considered by a person skilled in the art to be soda lime silicate glass (hereinafter also referred to as "SL in the broad sense") that is suitable for the float process, or more specifically, within the following mass% range:
SiO₂: 65% to 80%
Al₂O₃: 0% to 16%
MgO: 0% to 20%
CaO: 0% to 20%
Na₂O: 10% to 20%, and
K₂O: 0% to 5%.

Hereinafter, components included in the glass composition of the glass plate 1 will be described.

### (SiO₂)

SiO₂ is a main component constituting the glass plate 1. An excessively low SiO₂ content results in a decrease in chemical durability, such as water resistance, and heat resistance of glass. On the other hand, an excessively high SiO₂ content results in an increase in the viscosity of the glass plate 1 at high temperatures, making it difficult to melt and form the glass plate 1. Therefore, an appropriate range of the SiO₂ content is 66 to 72 mol%, and preferably 67 to 70 mol%.

### (Al₂O₃)

Al₂O₃ is a component for improving the chemical durability, such as water resistance, of the glass plate 1 and furthermore facilitating the movement of alkali metal ions in the glass, thereby increasing the surface compressive stress after chemical strengthening and increasing the depth of the stress layer. On the other hand, an excessively high Al₂O₃ content results in an increase in the viscosity of the glass melt, thereby increasing T₂ and T₄ and degrading the clarity of the glass melt, and consequently, making it difficult to produce a high-quality glass plate.

Therefore, an appropriate range of the Al₂O₃ content is 1 to 12 mol%. The Al₂O₃ content is preferably 10 mol% or less and preferably 2 mol% or more.

### (MgO)

MgO is an essential component that improves the meltability of glass. In order to sufficiently achieve this effect, it is preferable that MgO is added to this glass plate 1. Furthermore, if the MgO content is less than 8 mol%, the surface compressive stress after chemical strengthening decreases, and the depth of the stress layer thus is likely to be small. On the other hand, if the MgO content is increased to more than a suitable amount, strengthening performance that is obtained through chemical strengthening degrades; in particular, the depth of the surface compressive stress layer drastically decreases. Although this adverse effect of MgO is the smallest compared with those of all the other alkaline earth metal oxides, the MgO content in this glass plate 1 is 15 mol% or less. Furthermore, a high MgO content increases T₂ and T₄ and degrades the clarity of the glass melt, thereby making it difficult to produce a high-quality glass plate.

Therefore, the MgO content in this glass plate 1 is within a range of 1 to 15 mol%, and preferably 8 mol% or more and 12 mol% or less.

### (CaO)

CaO has the effect of reducing the viscosity at high temperatures; however, an extremely high CaO content that exceeds a suitable range is likely to devitrify the glass plate 1 and inhibits the movement of sodium ions in the glass plate 1. In the case where CaO is not contained, the surface compressive stress after chemical strengthening is likely to decrease. On the other hand, if CaO is contained in an amount of more than 8 mol%, the surface compressive stress after chemical strengthening markedly decreases, the depth of the compressive stress layer markedly decreases, and the glass plate 1 is likely to be devitrified.

Therefore, an appropriate range of the CaO content is 1 to 8 mol%. The CaO content is preferably 7 mol% or less and preferably 3 mol% or more.

### (SrO, BaO)

SrO and BaO significantly reduce the viscosity of the glass plate 1, and when contained in a small amount, SrO and BaO more markedly have the effect of reducing the liquid phase temperature T_{L} than CaO. However, even when added in a very small amount, SrO and BaO markedly hinder the movement of sodium ions in the glass plate 1, significantly reduce the surface compressive stress, and considerably reduce the depth of the compressive stress layer.

Therefore, it is preferable that this glass plate 1 substantially does not contain SrO and BaO.

### (Na₂O)

Na₂O is a component for increasing the surface compressive stress and increasing the depth of the surface compressive stress layer, due to sodium ions being replaced by potassium ions. However, if the Na₂O content is increased to more than a suitable amount, stress relaxation during chemical strengthening treatment surpasses generation of the surface compressive stress due to ion exchange during chemical strengthening treatment, and as a result, the surface compressive stress is likely to decrease.

Also, while Na₂O is a component for improving meltability and reducing T₄ and T₂, an excessively high Na₂O content results in a significant decrease in water resistance of the glass. If the Na₂O content in the glass plate 1 is 10 mol% or more, a sufficient effect of reducing T₄ and T₂ can be obtained, and if the Na₂O content is more than 16 mol%, the surface compressive stress markedly decreases due to the stress relaxation.

Therefore, an appropriate range of the Na₂O content in the glass plate 1 of the present embodiment is 10 to 16 mol%. The Na₂O content is preferably 12 mol% or more, and more preferably 15 mol% or less.

### (K₂O)

K₂O, like Na₂O, is a component that improves the meltability of glass. Also, in a low K₂O content range, the ion exchange rate during chemical strengthening increases, and the depth of the surface compressive stress layer thus increases, while, on the other hand, the liquid phase temperature T_{L} of the glass plate 1 decreases. Therefore, it is preferable that K₂O is contained in a small amount.

On the other hand, although the effect of reducing T₄ and T₂ of K₂O is smaller than that of Na₂O, a high K₂O content inhibits clarification of the glass melt. Furthermore, the higher the K₂O content, the lower the surface compressive stress after the chemical strengthening. Therefore, an appropriate range of the K₂O content is 0 to 1 mol%.

### (Li₂O)

Li₂O, when contained even in a small amount, significantly reduces the depth of the compressive stress layer. Also, in the case where a glass member containing Li₂O is chemically strengthened in a molten salt of potassium nitrate alone, the molten salt deteriorates significantly faster than in the case of a glass member that does not contain Li₂O. Specifically, in the case where the glass members are repeatedly chemically strengthened using the same molten salt, surface compressive stress generated in the glass surface of the glass member containing Li₂O decreases in the fewer cycles. Therefore, although the glass plate 1 of the present embodiment may contain Li₂O in an amount of 1 mol% or less, it is preferred that the glass plate 1 substantially does not contain Li₂O.

### (B₂O₃)

B₂O₃ is a component that lowers the viscosity of the glass plate 1 and improves meltability. However, if the B₂O₃ content is excessively high, phase separation is likely to occur in the glass plate 1, resulting in a decrease in the water resistance of the glass plate 1. Also, a compound formed of B₂O₃ and an alkali metal oxide may volatilize and cause damage to a refractory material of a glass melting chamber. Furthermore, if B₂O₃ is contained, the depth of the compressive stress layer formed by chemical strengthening becomes smaller. Therefore, an appropriate B₂O₃ content is 0.5 mol% or less. In the present invention, it is more preferable that the glass plate 1 substantially does not contain B₂O₃.

### (Fe₂O₃)

Usually, Fe is present as Fe²⁺ or Fe³⁺ in glass, and functions as a colorant. Fe³⁺ is a component that improves the ultraviolet absorption performance of glass, and Fe²⁺ is a component that improves heat absorption performance. In the case where the glass plate 1 is to be used as a cover glass for a display, its coloration is required to be inconspicuous, and therefore, a lower Fe content is preferred. However, Fe from industrial raw materials is often inevitably mixed in glass. Therefore, the content of iron oxide in terms of Fe₂O₃ is preferably 0.15 mass% or less, more preferably 0.1 mass% or less, and even more preferably 0.02 mass% or less, where the glass plate 1 as a whole is taken as 100 mass%.

### (TiO₂)

TiO₂ is a component that reduces the viscosity of the glass plate 1 and also increases the surface compressive stress generated by chemical strengthening, but TiO₂ may add a yellow color to the glass plate 1. Therefore, an appropriate TiO₂ content is 0 to 0.2 mass%. Furthermore, TiO₂ from commonly used industrial raw materials is inevitably mixed in the glass plate 1 and thus may be contained therein in an amount of approximately 0.05 mass%. With a content like this, TiO₂ does not add any color to glass and may be contained in the glass plate 1 of the present embodiment.

### (ZrO₂)

Especially when producing a glass plate using the float process, ZrO₂ may be mixed in the glass plate 1 from refractory bricks constituting a glass melting furnace, and the ZrO₂ content in that case is known to be approximately 0.01 mass%. On the other hand, ZrO₂ is a component that improves the water resistance of glass and increases the surface compressive stress generated by chemical strengthening. However, a high ZrO₂ content may cause an increase in working temperature T₄ and a sharp increase in liquid phase temperature T_{L} and, in the production of a glass plate using the float process, makes it likely that crystals containing precipitated Zr remain in the produced glass as foreign matter. Therefore, an appropriate ZrO₂ content is 0 to 0.1 mass%.

### (SO₃)

In the float process, a sulfate such as sodium sulfate (Na₂SO₄) is widely used as a clarifying agent. The sulfate decomposes in the molten glass and generates a gas component, and thus, degassing of the glass melt is promoted, but a portion of the gas component dissolves and remains in the glass plate 1 as SO₃. It is preferable that the SO₃ content in the glass plate 1 of the present invention is 0 to 0.3 mass%.

### (CeO₂)

CeO₂ is used as a clarifying agent. CeO₂ produces O₂ gas in the molten glass, and therefore, CeO₂ contributes to degassing. On the other hand, an excessively high CeO₂ content causes the glass to be discolored to yellow. Therefore, the CeO₂ content is preferably 0 to 0.5 mass%, more preferably 0 to 0.3 mass%, and even more preferably 0 to 0.1 mass%.

### (SnO₂)

It is known that, in a glass plate that is formed using the float process, tin from a tin bath has diffused into a surface that has been in contact with the tin bath during the formation of the glass plate, and the diffused tin is present as SnO₂. Also, SnO₂ mixed with glass raw materials contributes to degassing. The SnO₂ content in the glass plate 1 of the present invention is preferably 0 to 0.3 mass%.

### (Other Components)

It is preferable that the glass plate 1 according to the present embodiment is substantially composed of the above-listed components. However, the glass plate 1 according to the present embodiment may also contain components other than the above-listed components as long as the content of each such component is preferably less than 0.1 mass%.

Examples of the components that can be contained include As₂O₅, Sb₂O₅, Cl, and F that may be added for the purpose of degassing the molten glass in addition to SO₃ and SnO₂ described above. However, it is preferable that As₂O₅, Sb₂O₅, Cl, and F are not added because of their significant adverse effects on the environment and for other reasons. Other examples of the components that can be contained are ZnO, P₂O₅, GeO₂, Ga₂O₃, Y₂O₃, and La₂O₃. Components other than the above that are derived from industrially used raw materials can also be contained as long as the content of each such component does not exceed 0.1 mass%. Since these components may be appropriately added as necessary, or inevitably mixed in, it is possible that the glass plate 1 of the present embodiment substantially does not contain these components.

### (Density (Specific Gravity): d)

With the above-described composition, the density of the glass plate 1 according to the present embodiment can be reduced to 2.53 g•cm⁻³ or less, or 2.51 g•cm⁻³ or less, or even to 2.50 g•cm⁻³ or less in certain cases.

In the float process or the like, if there is a significant difference in density between product types of glass, the molten glass having the higher density may stagnate in a bottom portion of the melting furnace when changing the product type of glass that is produced, and therefore, the product type cannot be changed smoothly. The density of soda-lime glass that is currently mass-produced using the float process is approximately 2.50 g•cm⁻³. For this reason, in the context of mass production using the float process, it is preferable that the density of the glass plate 1 is close to the aforementioned values, or specifically is 2.45 to 2.55 g•cm⁻³, more preferably 2.47 to 2.53 g•cm⁻³, and even more preferably 2.47 to 2.50 g•cm⁻³.

### (Elasticity: E)

A glass substrate may be warped when subjected to chemical strengthening that involves ion exchange. In order to prevent the warpage, it is preferable that the glass plate 1 has a high elasticity. According to the present invention, the elasticity (Young's modulus: E) of the glass plate 1 can be increased to 70 GPa or more, or even to 72 GPa or more.

Hereinafter, chemical strengthening of the glass plate 1 will be described.

### (Chemical Strengthening Conditions and Compressive Stress Layer)

The glass plate 1 according to the present invention can be chemically strengthened by performing an ion exchange treatment in which the glass plate 1 that contains sodium is brought into contact with a molten salt that contains monovalent cations, preferably potassium ions, that have a larger ionic radius than sodium ions, and sodium ions in the glass plate 1 are replaced with the monovalent cations. A compressive stress layer in which compressive stress is applied is thus formed in the surface of the glass plate 1.

A typical example of the molten salt is potassium nitrate. Although a mixed molten salt of potassium nitrate and sodium nitrate may be used, a molten salt of potassium nitrate alone is preferable because it is difficult to control the concentration of the mixed molten salt.

The surface compressive stress and the depth of the compressive stress layer of a tempered glass member can be controlled by adjusting not only the glass composition of the article but also the temperature of the molten salt during the ion exchange treatment and the treatment time.

A tempered glass member with an extremely high surface compressive stress and an extremely deep depth of the compressive stress layer can be obtained by bringing the above-described glass plate 1 into contact with a potassium nitrate molten salt. Specifically, it is possible to obtain a tempered glass member having a surface compressive stress of 700 MPa or more and a compressive stress layer with a depth of 20 um or more. Furthermore, it is also possible to obtain a tempered glass member having a compressive stress layer with a depth of 20 pm or more and a surface compressive stress of 750 MPa or more.

In a case where a glass plate 1 having a thickness of 3 mm or more is used, air-quench tempering can be used as a common tempering method, rather than chemical strengthening.

### <2. Functional Film>

Next, the functional film 2 will be described with reference to FIG. 2. FIG. 2 is an enlarged cross-sectional view schematically showing the vicinity of the surface of the functional film. The functional film 2 contains an inorganic oxide that forms three-dimensional network bonds, inorganic oxide microparticles that are retained by the inorganic oxide, and photocatalyst microparticles that are retained by the inorganic oxide. Antibacterial metal ions may also be added as necessary. These will be described below.

### <2-1. Inorganic Oxide>

The inorganic oxide serves as a binder that retains inorganic oxide microparticles and metal ions. For example, the functional film contains a silicon oxide, which is an oxide of Si, as the inorganic oxide, and preferably contains a silicon oxide as a main component. Containing a silicon oxide as the main component is suitable for reducing the refractive index of the film and suppressing the reflectance of the film. The functional film may contain a component other than a silicon oxide, and may contain a component that partially contains a silicon oxide.

The component that partially contains a silicon oxide may be, for example, a component in which a silicon atom and an oxygen atom are alternately bonded forming a three-dimensional network structure of three-dimensionally spreading siloxane bonds (Si-O-Si). In this portion of the component, an atom other than a silicon atom and an oxygen atom, a functional group, or the like is bonded to the silicon atom or oxygen atom. Examples of the atom other than a silicon atom and an oxygen atom include a nitrogen atom, a carbon atom, a hydrogen atom, and metal elements that will be described in the next paragraph. Examples of the functional group include organic groups that will be described as R in a paragraph below. This component is not a silicon oxide in a strict sense because it is not composed only of a silicon atom and an oxygen atom. However, in describing the characteristics of the functional film 2, treating a silicon oxide portion that is composed of a silicon atom and an oxygen atom as a "silicon oxide" is appropriate and is also consistent with usage in the field. In this specification, the silicon oxide portion is also treated as a silicon oxide. As is clear from the above description, the atomic ratio between silicon atoms and oxygen atoms in a silicon oxide need not be stoichiometric (1:2) .

The functional film 2 can contain a metal oxide other than a silicon oxide, or specifically, a metal oxide component or a metal oxide portion that contains an element other than silicon. The metal oxide that can be contained in the functional film 2 is not particularly limited, and may be an oxide of at least one metal element selected from the group consisting of Al, Ti, Zr, Ta, Nb, Nd, La, Ce, and Sn, for example. The functional film 2 may contain an inorganic compound component other than an oxide, examples of which include a nitride, a carbide, and a halide, and may contain an organic compound component.

A metal oxide such as a silicon oxide can be formed from a hydrolyzable organic metal compound. An example of a hydrolyzable silicon compound is a compound represented by Formula (1):

RₙSiY₄₋ₙ (1)

where R is an organic group including at least one selected from an alkyl group, a vinyl group, an epoxy group, a styryl group, a methacryloyl group, and an acryloyl group; Y is a hydrolyzable organic group that is at least one selected from an alkoxy group, an acetoxy group, an alkenyloxy group, and an amino group, or a halogen atom, which is preferably Cl; and n is an integer from 0 to 3 and is preferably 0 or 1.

R is preferably an alkyl group, for example, an alkyl group having 1 to 3 carbon atoms, and a methyl group is particularly preferable. Y is preferably an alkoxy group, for example, an alkoxy group having 1 to 4 carbon atoms, and a methoxy group and an ethoxy group are particularly preferable. Two or more compounds represented by the formula above may also be used in combination. As an example of this combination, tetraalkoxysilane, where n is 0, and monoalkyltrialkoxysilane, where n is 1, may be used together.

A specific example of a preferable silicon compound having a hydrolyzable group and represented by Formula (I) is a silicon alkoxide where X in formula (I) is an alkoxyl group. More preferably, the silicon alkoxide includes a four-functional silicon alkoxide that corresponds to a compound (SiX₄) where m=0 in Formula (I). Specific examples of four-functional silicon alkoxides include tetramethoxysilane and tetraethoxysilane. A silicon alkoxide may be used alone, or two or more silicon alkoxides may be used in combination. When two or more silicon alkoxides are used in combination, it is more preferable that a four-functional silicon alkoxide is the main component of silicon alkoxides.

A compound represented by Formula (1) after hydrolysis and polycondensation forms a network structure in which silicon atoms are bonded to one another via oxygen atoms. In this structure, the organic groups represented by R are contained in a state of being directly bonded to silicon atoms.

The content of the inorganic oxide in the functional film 2 is preferably 5 to 50 mass%, and more preferably 10 to 40 mass%. A large content of the inorganic oxide deteriorates an anti-reflection function as described later and thus is not preferable. On the other hand, when the content of the inorganic oxide is small, bonding areas between microparticles and with the glass plate 1 become small and wear resistance is deteriorated.

### <2-2. Inorganic Oxide Microparticles>

The functional film 2 further contains inorganic oxide microparticles as at least a portion of the inorganic oxide. As shown in FIG. 2, the inorganic oxide microparticles are dispersed substantially in a single layer over the glass plate 1. An inorganic oxide forming the inorganic oxide microparticles is an oxide of at least one element selected from Si, Al, Ti, Zr, Ta, Nb, Nd, La, Ce, and Sn, for example. A plurality of types of inorganic oxide microparticles may be contained. For example, a plurality of types of inorganic oxide microparticles that have different average particle diameters may be contained. For example, silica microparticles can be used as inorganic oxide microparticles that have a large average particle diameter. Silica microparticles can be introduced into the functional film 2 by adding colloidal silica, for example. Inorganic oxide microparticles favorably transmit a stress applied to the functional film 2 to the glass plate 1 supporting the functional film 2 and also have high hardness. Therefore, the addition of inorganic oxide microparticles is advantageous from the standpoint of improving wear resistance of the functional film 2. Inorganic oxide microparticles can be supplied to the functional film 2 by adding the inorganic oxide microparticles that are formed in advance to a coating solution for forming the functional film 2.

If the average particle diameter of inorganic oxide microparticles is too large, the functional film 2 may be opaque, and if the average particle diameter is too small, the inorganic oxide microparticles aggregate and are difficult to disperse uniformly. From this standpoint, the average particle diameter of primary particles of the inorganic oxide microparticles is preferably 50 to 150 nm, for example, and more preferably 80 to 130 nm. Also, the average particle diameter of the inorganic oxide microparticles is preferably greater than the thickness of the functional film 2. Also, the average particle diameter of the inorganic oxide microparticles is preferably at least five times the average particle diameter of photocatalyst microparticles, which will be described later. When the average particle diameter of photocatalyst particles is small as described above, the influence of an apparent refractive index is small and reflection can be suppressed.

Note that the average particle diameter of inorganic oxide microparticles referred to here is the average particle diameter of primary particles of the inorganic oxide microparticles. The same also applies to photocatalyst microparticles, which will be described later. The average particle diameter of inorganic oxide microparticles is determined by measuring particle diameters of randomly selected 50 microparticles observed using a scanning electron microscope and calculating an average value of the measured values. When the content of inorganic oxide microparticles is large, the functional film 2 may be opaque. The content of inorganic oxide microparticles in the functional film 2 is preferably 10 to 50 mass%, and more preferably 15 to 45 mass%.

The ratio of the content of inorganic oxide microparticles to the total content of inorganic oxide microparticles and the inorganic oxide (binder) in the functional film 2 is preferably greater than 0.4. That is, it is preferable that the content of the binder is small as described above in terms of the relationship between inorganic oxide microparticles and the binder as well.

As described above, inorganic oxide microparticles are dispersed over the glass plate, and the distance between adjacent inorganic oxide microparticles is preferably 1 µm or less. This is because when the distance is too large, widths of recesses and protrusions formed in the surface of the functional film become large, and it becomes difficult to reduce the apparent refractive index.

### <2-3. Photocatalyst Microparticles>

As shown in FIG. 2, inorganic oxide microparticles are stacked in a plurality of layers between adjacent inorganic oxide microparticles. For example, microparticles of titanium oxide (TiO₂), cerium oxide (CeO₂), or the like can be used as the photocatalyst microparticles. The average particle diameter of the photocatalyst microparticles is smaller than the average particle diameter of the above-described inorganic oxide microparticles such as silica microparticles, and is preferably 1 to 50 nm, for example, and more preferably 25 to 30 nm. The content of photocatalyst microparticles in the functional film 2 is preferably 35 to 70 mass%, and more preferably 40 to 60 mass%.

The refractive index of the photocatalyst microparticles can be 2.0 to 2.8, for example. The refractive index may be larger than the refractive index of the glass plate 1, which is a substrate.

### <2-4. Metal Ion>

Metal ions have an antibacterial property, and can be formed of monovalent or divalent copper ions, silver ions, or the like. The content of metal ions in the functional film 2 is preferably 1 to 30 mass% of the functional film 2, for example, and more preferably 3 to 15 mass%.

### <2-5. Thickness of Functional Film>

The thickness of the functional film 2 is preferably 10 to 200 nm, for example, and more preferably 50 to 150 nm. If the thickness is too large, the haze ratio may become high or the film may be colored excessively. On the other hand, if the thickness is too small, the functional film 2 may not be able to retain inorganic oxide microparticles and metal ions and the inorganic oxide microparticles and metal ions may separate from the functional film 2. Also, durability of the functional film may become low.

### <2-6. Optical Properties of Functional Film>

The refractive index of the functional film 2 is preferably 1.1 to 1.5, and more preferably 1.2 to 1.4. As described above, in the functional film 2 according to the present invention, photocatalyst microparticles are stacked between dispersed inorganic oxide microparticles, and the apparent refractive index of the functional film 2 can be reduced by voids formed by the stacked photocatalyst microparticles. As a result, the reflectance can be reduced. The refractive index can be measured using a method specified in JIS B-7071-1:2015, for example.

The reflectance of the functional film 2 is preferably 0 to 10, and more preferably 2 to 7. The reflectance can be measured based on JIS R-3106:2019, for example.

### <2-7. Method for Forming Functional Film>

There is no particular limitation on the method for forming the functional film 2, and the functional film 2 can be formed in the following manner, for example. First, a material that forms the above-described three-dimensional network structure, for example, a silicon alkoxide such as tetraethoxysilane is dissolved to obtain a solution under an acidic condition, and thus, a precursor solution is produced. Then, a liquid that contains the above-described antibacterial metal ions, for example, a copper chloride aqueous solution, a dispersion that contains inorganic oxide microparticles such as colloidal silica, and a dispersion that contains photocatalyst microparticles such as titanium oxide microparticles are mixed with the precursor to produce a coating liquid for forming the functional film.

The coating liquid may be irradiated with ultraviolet rays to activate photocatalyst microparticles. In this case, the coating liquid can be irradiated with ultraviolet rays with an amount of 5 to 50 W/m² for 1 to 24 hours, for example.

Next, the coating liquid is applied to the first surface of the cleaned glass plate 1. Although there is no particular limitation on the application method, flow coating, spray coating, spin coating, or the like can be used, for example. After that, the applied coating liquid is dried at a predetermined temperature (e.g., 80°C to 200°C) in an oven or the like in order to, for example, volatilize an alcohol from the solution, and then sintered at a predetermined temperature (e.g., 200°C to 500°C) for the purpose of hydrolysis and organic chain decomposition, for example. Thus, the functional film 2 can be obtained.

As described above, substantially a single layer of inorganic oxide microparticles is formed in the completed functional film. This configuration can be achieved by applying the coating liquid thin or setting the solid content concentration in the coating liquid to 10% or less, for example, preferably 7% or less, and more preferably 5% or less.

### <3. Optical Properties of Glass Member>

With regard to the optical properties of the glass member 10, for example, visible light transmittance is preferably 80% or more, and more preferably 90% or more. Furthermore, the haze ratio of the glass member 10 is 20% or less, 15% or less, or particularly 10% or less, for example, or may optionally be 0.1% to 8.0% or even 0.1% to 6.0%.

### <4. Features>

(1) In the glass member 10 according to the present embodiment, the functional film 2 contains an inorganic oxide that forms three-dimensional network bonds, and inorganic oxide microparticles and photocatalyst microparticles that are retained by the inorganic oxide. As described above, voids are formed between stacked photocatalyst microparticles. Therefore, the refractive index can be reduced, and consequently, the reflectance can be reduced. In particular, substantially a single layer of inorganic oxide microparticles is formed in the functional film of the present embodiment, and therefore, the functional film has a superior reflection suppressing function compared with a functional film in which inorganic oxide microparticles are stacked in a plurality of layers. In contrast, if a plurality of layers of inorganic oxide microparticles are formed, filling ratios of the binder and photocatalyst microparticles become high in layers close to the glass plate 1, and the number of voids decreases. As a result, the apparent refractive index increases and the reflection suppressing function deteriorates. Moreover, the functional film of the present embodiment can be made thin, and accordingly, the cost can be reduced.
(2) The functional film 2 contains photocatalyst microparticles, and therefore exhibits an antibacterial function and an antifouling function. In particular, the photocatalyst microparticles are stacked between inorganic oxide microparticles dispersed in a single layer, and are exposed to the outside, and therefore can easily exhibit the antibacterial function. Also, voids are included in a portion in which photocatalyst microparticles are exposed to the outside, and contribute to a reduction in the refractive index, and consequently the reflection suppressing function is improved. Therefore, the reflection suppressing function, the antibacterial function, and the like can be achieved at the same time with the single functional film 2 according to the present invention.
(3) The inorganic oxide serves as a binder that retains metal ions, and accordingly, when the functional film 2 contains antibacterial metal ions, elution of the metal ions can be suppressed.
(4) In the functional film 2 of the present invention, gaps between inorganic oxide microparticles having a large average particle diameter are filled with photocatalyst microparticles having a small average particle diameter, and accordingly, elution of antibacterial metal ions contained in the functional film 2 can be further suppressed by the photocatalyst microparticles.
(5) When the functional film 2 is irradiated with light such as ultraviolet rays, photocatalyst microparticles are activated, and antibacterial metal ions are reduced and precipitate on surfaces of the photocatalyst microparticles. As a result, elution of the metal ions is further suppressed. This effect can be achieved not only when the completed functional film 2 is irradiated with light but also when the coating liquid for forming the functional film 2 is irradiated with light as described above. Moreover, photocatalyst microparticles are electrostatically bound to metal ions or ion complexes, and therefore, elution of metal ions is further suppressed. Furthermore, photocatalyst microparticles have antibacterial activity, and therefore, in addition to antibacterial metal ions, the photocatalyst microparticles can further improve the antibacterial performance.
(6) When photocatalyst microparticles having a smaller average particle diameter than inorganic oxide microparticles are contained, the photocatalyst microparticles are bound surrounding the inorganic oxide microparticles having a larger average particle diameter, and therefore, the surface area of a region in which the photocatalyst microparticles are stacked can be increased. This enables the photocatalyst to exhibit its effects more easily.

### <5. Variations>

Although an embodiment of the present invention has been described above, the present invention is not limited to the above embodiment, and various modifications can be made without departing from the spirit of the present invention. Note that the following variations can be combined as appropriate.

In the above embodiment, a glass plate is used as the substrate of the present invention, but a resin substrate can also be used as well as a glass plate.

### Examples

Hereinafter, examples of the present invention will be described. However, the present invention is not limited to the following examples.

### (1) Preparation of Examples

Float glass plates each having a size of 50 mm × 50 mm and a thickness of 1.1 mm were prepared, and alkaline ultrasonic cleaning was performed on the surfaces of the glass plates. Next, functional-film-forming coating liquids having the following compositions were prepared for Examples 1 to 12. Solid content concentrations in the coating liquids of Examples 1 to 5 were 5%, solid content concentrations in the coating liquids of Examples 6 to 11 were 7%, and solid content concentrations in the coating liquids of Examples 12 to 14 were 4%. Copper ions were contained only in Example 14. Details of "Concentrate Total" in Tables 1 to 3 are shown in Table 4. The unit of all values is gram.

**[Table 1]**

| | Concentrate Total/g | PG/g | PGME/g | STS-01(TiO₂)/g | Total/g |
|---|---|---|---|---|---|
| Ex. 1 | 5.00 | 0.31 | 9.18 | 0.90 | 15.38 |
| Ex. 2 | 4.00 | 0.27 | 8.18 | 0.89 | 13.33 |
| Ex. 3 | 3.00 | 0.22 | 6.87 | 0.82 | 10.91 |
| Ex. 4 | 5.00 | 0.44 | 14.74 | 2.04 | 22.22 |
| Ex. 5 | 5.00 | 0.57 | 19.90 | 3.10 | 28.57 |

**[Table 2]**

| | Concentrate Total/g | PG/g | PGME/g | STS-01(TiO₂)/g | Total/g |
|---|---|---|---|---|---|
| Ex. 6 | 5.00 | 0.20 | 4.29 | 0.71 | 10.20 |
| Ex. 7 | 5.00 | 0.20 | 4.29 | 0.71 | 10.20 |
| Ex. 8 | 5.00 | 0.20 | 4.29 | 0.71 | 10.20 |
| Ex. 9 | 5.00 | 0.20 | 4.29 | 0.71 | 10.20 |
| Ex. 10 | 5.00 | 0.20 | 4.29 | 0.71 | 10.20 |
| Ex. 11 | 5.00 | 0.20 | 4.29 | 0.71 | 10.20 |

**[Table 3]**

| | Concentrate Total/g | PG/g | PGME/g | STS-01(TiO₂)/g | CuCl₂/g | Total/g |
|---|---|---|---|---|---|---|
| Ex. 12 | 5.00 | 0.45 | 15.91 | 1.36 | - | 22.73 |
| Ex. 13 | 5.00 | 0.56 | 20.19 | 2.04 | - | 27.78 |
| Ex. 14 | 2.50 | 0.28 | 9.53 | 0.88 | 0.75 | 13.89 |

**[Table 4]**

| | PL-7/g | PGME/g | TEOS/g | 1N-HCl/g | Concentrate Total/g |
|---|---|---|---|---|---|
| Ex. 1 | 1.413 | 2.930 | 0.607 | 0.050 | 5.00 |
| Ex. 2 | 1.130 | 2.344 | 0.485 | 0.040 | 4.00 |
| Ex. 3 | 0.848 | 1.758 | 0.364 | 0.030 | 3.00 |
| Ex. 4 | 1.413 | 2.930 | 0.607 | 0.050 | 5.00 |
| Ex. 5 | 1.413 | 2.930 | 0.607 | 0.050 | 5.00 |
| Ex. 6 | 1.413 | 2.930 | 0.607 | 0.050 | 5.00 |
| Ex. 7 | 1.087 | 2.996 | 0.867 | 0.050 | 5.00 |
| Ex. 8 | 0.870 | 3.040 | 1.040 | 0.050 | 5.00 |
| Ex. 9 | 0.652 | 3.084 | 1.214 | 0.050 | 5.00 |
| Ex. 10 | 0.435 | 3.128 | 1.387 | 0.050 | 5.00 |
| Ex. 11 | 0.217 | 3.172 | 1.560 | 0.050 | 5.00 |
| Ex. 12 | 1.413 | 2.930 | 0.607 | 0.050 | 5.00 |
| Ex. 13 | 1.413 | 2.930 | 0.607 | 0.050 | 5.00 |
| Ex. 14 | 0.707 | 1.465 | 0.303 | 0.025 | 2.50 |

| | | | | | |
|---|---|---|---|---|---|
| "STS-01" in Tables 1 to 3 represents a TiO₂ microparticle dispersion manufactured by ISHIHARA SANGYO KAISHA, LTD., and "PL-7" in Table 4 represents a SiO₂ microparticle dispersion manufactured by FUSO CHEMICAL CO., LTD. | | | | | |

Subsequently, the coating liquids according to Examples 1 to 14 were applied to the surfaces of the glass plates through spin coating, and then the glass plates were heated at 300°C for 30 minutes in an oven. Thus, glass members according to Examples 1 to 15 were obtained. The thickness of a functional film in each example was about 100 nm.

Compositions of the functional films in the completed glass members were as follows. The unit of the values is mass%. As shown in Tables given below, the content of TiO₂ microparticles was mainly changed between Examples 1 to 5. On the other hand, in Examples 6 to 11, the content of TiO₂ microparticles was constant and contents of SiO₂ microparticles and a SiO₂ binder were changed.

**[Table 5]**

| | SiO₂ microparticles | TiO₂ microparticles | SiO₂ binder |
|---|---|---|---|
| Ex. 1 | 42% | 35% | 23% |
| Ex. 2 | 39% | 40% | 21% |
| Ex. 3 | 36% | 45% | 19% |
| Ex. 4 | 29% | 55% | 16% |
| Ex. 5 | 23% | 65% | 12% |

**[Table 6]**

| | SiO₂ microparticles | TiO₂ microparticles | SiO₂ binder | SiO₂ microparticles /SiO₂ microparticles +SiO₂ binder |
|---|---|---|---|---|
| Ex. 6 | 46% | 30% | 25% | 0.65 |
| Ex. 7 | 35% | 30% | 35% | 0.50 |
| Ex. 8 | 28% | 30% | 42% | 0.40 |
| Ex. 9 | 210 | 30% | 49% | 0.30 |
| Ex. 10 | 140 | 30% | 56% | 0.20 |
| Ex. 11 | 7% | 30% | 63% | 0.10 |

**[Table 7]**

| | SiO₂ microparticles | TiO₂ microparticles | SiO₂ binder | Cu ion |
|---|---|---|---|---|
| Ex. 12 | 36% | 45% | 19% | - |
| Ex. 13 | 29% | 55% | 16% | - |
| Ex. 14 | 29% | 45% | 16% | 10% |

### (2) Evaluation

The following tests were performed on the glass members of Examples 1 to 14.

### (2-1) Reflectance

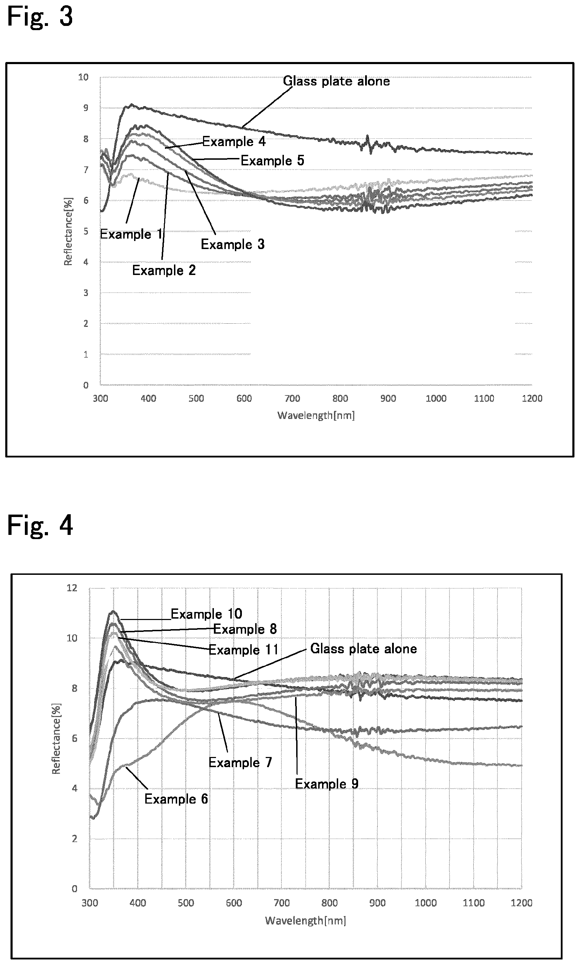

The reflectance was measured based on JIS R-3106:2019. A glass plate on which a functional film was not formed was used for comparison. Results are shown in FIGS. 3 to 5.

As shown in FIG. 3, the greater the content of TiO₂ microparticles was, the higher visible light reflectance was at wavelengths of less than 600 nm and the lower the reflectance was at wavelengths of 600 nm or more. That is, in the wavelength range of less than 600 nm, the reflection suppressing function deteriorates as the content of TiO₂ microparticles increases due to the influence of the refractive index of TiO₂, and in the wavelength range of 600 nm or more, the reflection suppression function improves as the content of TiO₂ microparticles increases due to the influence of voids. This is because the influence of voids varies according to the wavelength even if sizes of voids are the same.

In both wavelength ranges, the reflectance was reduced when compared with the glass plate that was not provided with an antibacterial film. On the other hand, as shown in FIG. 4, in general, the smaller the amount of the binder was, the lower the reflectance in the visible light range was. In all of Examples 6 to 11, the reflectance in the visible light range was lower than that of the glass plate that was not provided with an antibacterial film. In particular, it was found that the reflection suppressing performance in the visible light range was high in Examples 6 and 7 in which the ratio of the content of SiO₂ microparticles to the total content of SiO₂ microparticles and the binder was greater than 0.4 or the content of the binder was less than 40%.

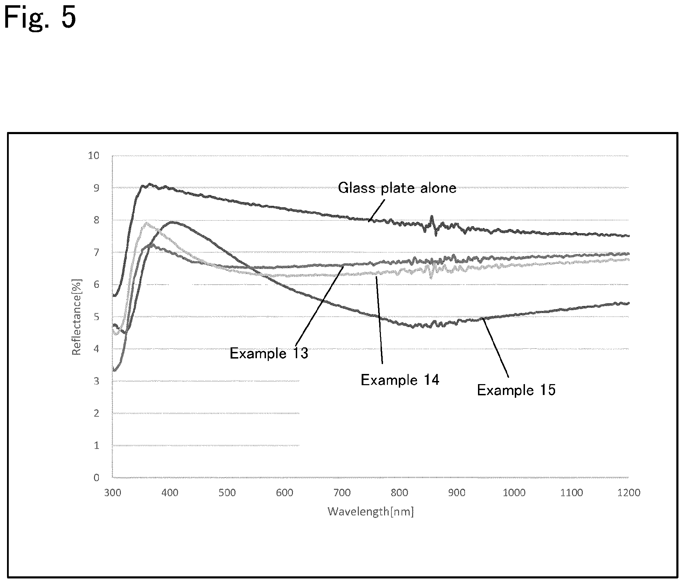

As shown in FIG. 5, the reflectance in Example 14 that contained copper ions was particularly low in the visible light range and the infrared range. This is presumably because copper ions absorbed light.

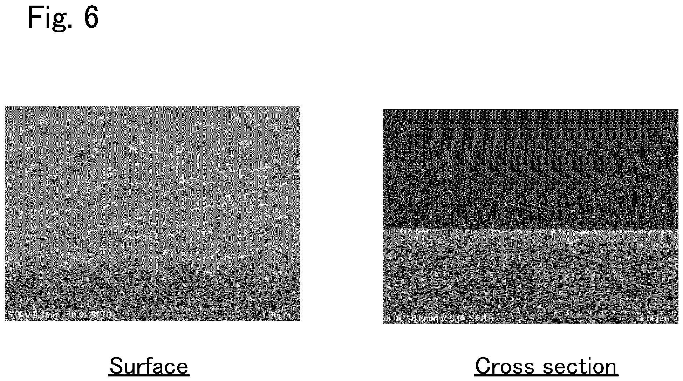

FIG. 6 shows photographs of the surface and a cross section of the antibacterial film of Example 1, which were taken using an SEM. As shown in these photographs, it can be found that silica microparticles having a large average particle diameter were dispersed over the surface of the antibacterial film and titanium oxide microparticles having a small average particle diameter were stacked in gaps between the silica microparticles. With this stacked structure, the antibacterial function and the reflection suppressing function described above can be realized at the same time. The inventor of the present invention confirmed that a stacked structure like this was similarly formed in the other examples.

### (2-2) Photocatalytic Performance

The glass members of Examples 1 to 10 were left to stand while leaning against a support in a high-temperature high-humidity environment (85°C, 85%RH) for 48 hours. Thereafter, the glass members were irradiated with UV rays with an amount of 1 mW/cm² using a black light, and the time it took until the contact angle of a water droplet dripped onto the glass members became 5° or less was measured. Results were as follows.

**[Table 8]**

| | |
|---|---|
| Ex. 1 | 10 h |
| Ex. 2 | 10 h |
| Ex. 3 | 5 h |
| Ex. 4 | 6 h |
| Ex. 5 | 12 h |
| Ex. 6 | 10 h |
| Ex. 7 | 10 h |
| Ex. 8 | 10 h |
| Ex. 9 | 10 h |

As shown in Example 1 to 5, the larger the content of TiO₂ microparticles was, the shorter the recovery time was, but conversely, the recovery time became shorter when the content of TiO₂ microparticles exceeded 50 mass%. This is presumably because when the content of TiO₂ microparticles is too large, the number of TiO₂ microparticles adhering to SiO₂ microparticles decreases and consequently the surface area of TiO₂ microparticles decreases.

### (2-3) Antibacterial Test

Antibacterial properties were evaluated under the following conditions based on JIS R1702:2020(film cover method).
· Bacteria used for the test: E. Coli (Escherichia coli, NBRC 3972)
Form of specimen: the above-described glass members
   - Incubation time: 8 hours
   - UV irradiation (wavelength: 360 nm): 0.25 mW/cm²
   - Calculation of antibacterial activity value (R): R = (Ut-U0)-(At-U0) = Ut-At

where U0 is the average of logarithmic values of the number of viable bacteria on the glass plate immediately after inoculation;
Ut is the average of logarithmic values of the number of viable bacteria on the glass plate 8 hours after inoculation; and
At is the average of logarithmic values of the number of viable bacteria on the glass member 8 hours after inoculation.
   - Incubation conditions: temperature: 35°C, humidity: 90% or more (compliant with JIS)
   - Covering film: 40 mm × 40 mm PP film (JIS standard)
   - Inoculation amount of test inoculum: 0.2 ml
   - Number of viable bacteria in test inoculum: 1.1×10⁶
   - Measurement of the number of viable bacteria: The number of viable bacteria on the glass plate immediately after inoculation with the inoculum and the number of viable bacteria on the glass member after 24 hours of incubation were measured.

The antibacterial activity value of Example 14 containing copper ions, which are antibacterial metal ions, was 4.0 or more. Antibacterial activity values of Examples 1 to 13 were 3.5 or more. Because a specimen with an antibacterial activity value of 2.0 or more is evaluated to have antibacterial activity, sufficient antibacterial performance was confirmed in the glass members according to these examples.

### List of Reference Numerals

- 1: Glass plate
- 2: Functional film
- 10: Glass member
- 100: Article

## Claims

1. A laminate comprising:
a substrate that has a first surface and a second surface; and
a functional film that is formed on the first surface,
wherein the functional film contains:
a binder containing a metal oxide that forms three-dimensional network bonds;
inorganic oxide microparticles that are retained by the binder and are dispersed in a single layer; and
photocatalyst microparticles that are arranged between the metal oxide microparticles.

2. The laminate according to claim 1,
wherein the ratio of the mass of the metal oxide microparticles to the total mass of the inorganic oxide microparticles and the binder contained in the functional film is greater than 0.4.

3. The laminate according to claim 1 or 2,
wherein the metal oxide microparticles are formed of silica, and
the photocatalyst microparticles are formed of titanium oxide.

4. The laminate according to any one of claims 1 to 3,
wherein the content of the photocatalyst microparticles in the functional film is 35 mass% or more.

5. The laminate according to any one of claims 1 to 4,
wherein the content of the metal oxide microparticles in the functional film is 50 mass% or less.

6. The laminate according to any one of claims 1 to 5,
wherein a distance between adjacent metal oxide microparticles among the metal oxide microparticles is less than 1 pm.

7. The laminate according to any one of claims 1 to 6,
wherein the photocatalyst microparticles are stacked between the metal oxide microparticles.

8. The laminate according to any one of claims 1 to 7,
wherein an average particle diameter of the metal oxide microparticles is at least five times an average particle diameter of the photocatalyst microparticles.

9. The laminate according to any one of claims 1 to 8,
wherein the photocatalyst microparticles has a larger refractive index than the substrate.

10. The laminate according to any one of claims 1 to 9,
wherein the functional film contains antibacterial metal ions.

11. The laminate according to claim 10,
wherein the metal ions are copper ions.

12. The laminate according to any one of claims 1 to 11,
wherein the substrate is a glass plate.
